# EUROPÄISCHE PATENTSCHRIFT

(11) **EP 1 958 724 B1**
(45) Veröffentlichungstag und Bekanntmachung des Hinweises auf die Patenterteilung: **22.06.2011**
(21) Anmeldenummer: 07008560.0
(22) Anmeldetag: 26.04.2007
(51) Int. Cl.: B23K 9/09, B23K 9/29, B23K 9/073

(54) **Verfahren zum Lichtbogenfügen mit Wechselstrom**
AC arc welding method
Procédé de soudage à l'arc à courant alternatif

(30) Priorität: 13.02.2007 DE 102007007098; 20.03.2007 EP 07005696
(43) Veröffentlichungstag der Anmeldung: 20.08.2008
(73) Patentinhaber: PanGas, 6252 Dagmersellen (CH)
(72) Erfinder: Wilhelm, Gerald, 86551 Aichach (DE)
(74) Vertreter: Gellner, Bernd

(56) Entgegenhaltungen:
- EP-A- 1 707 296
- WO-A-2006/089322
- US-A1- 2002 030 043
- US-A1- 2006 151 440

## Beschreibung

Die Erfindung betrifft ein Verfahren zum Lichtbogenfügen, insbesondere zum Lichtbogenschweißen mit abschmelzender Elektrode, wobei zur Lichtbogenerzeugung ein Wechselstrom zwischen Elektrode und Werkstück angelegt wird, wobei der Wechselstrom eine Stromform aufweist, die sich nach einer Periode wiederholt, und wobei die Stromform innerhalb einer Periode zumindest eine positive Phase, die sich mindestens in eine positive Hochstromphase und in mindestens eine positive Grundstromphase gliedert, und zumindest eine negative Phase aufweist, wobei die positive Grundstromphase innerhalb der Periode zeitlich nach der positiven Hochstromphase angelegt wird.

Zum Lichtbogenschweißen unter Schutzgas werden verschiedene Schweißverfahren eingesetzt. Neben dem Verfahren mit abschmelzender Elektrode, zu welcher das Metall-Aktiv-Gas- und das Metall-Inert-Gas-Schweißen zählen, gibt es das mit nicht abschmelzender Elektrode arbeitende Wolfram-Inert-Gas-Schweißen und das Plasmaschweißen. Beim Metall-Schutzgas-Löten (MSG-Löten) wird eine stoffschlüssige Verbindung durch den Zusatzwerkstoff hergestellt. Dazu wird der Zusatzwerkstoff im Lichtbogen aufgeschmolzen und verbindet sich mit dem Grundwerkstoff. Zu Steigerung der Produktivität werden in den letzten Jahren zunehmend Hochleistungsschweißverfahren eingesetzt. Hochleistungsschweißverfahren, welche in der Regel mit abschmelzenden Elektroden arbeiten, zeichnen sich im Vergleich zum konventionellen Metall-Schutzgas-Schweißen durch höhere Abschmelzleistungen der Elektrode aus. Die Abschmelzleistung ist proportional zum Drahtdurchmesser und zur Drahtvorschubgeschwindigkeit. Die höheren Abschmelzleistungen lassen sich in höhere Schweißgeschwindigkeiten oder/und in höhere Schweißnahtvolumina umsetzen - im Vergleich zum konventionellen Schweißen. Grundlagen des Metall-Schutzgas-Hochleistungsschweißens sind im Merkblatt des deutschen Verbandes für Schweißen und verwandte Verfahren e.V., DSV 0909-1 (September 2000) und DSV 0909-2 (Juni 2003) näher beschrieben.

Beim Lichtbogenschweißen und beim Lichtbogenlöten mit abschmelzender Elektrode brennt ein Lichtbogen zwischen abschmelzender Elektrode und Werkstück. Die beiden Verfahren werden unter dem Begriff Lichtbogenfügen zusammengefasst. Zur Erzeugung des Lichtbogens wird ein elektrisches Feld zwischen Elektrode und Werkstück angelegt. Der Materialübergang von der abschmelzenden Elektrode zum Werkstück erfolgt durch Ablösung von Tropfen von der Elektrode. Bei positiv gepolter

Elektrode wird die Tropfenablösung durch den Pincheffekt wirkungsvoll unterstützt. Der Pincheffekt bewirkt, dass der Tropfen, der am Ende der Elektrode entsteht, eingeschnürt wird, wodurch sich der Tropfen leichter lösen kann. Dies erhöht die Prozessstabilität. Bei einer positiven Polung der Elektrode wird mit Gleichstrom- oder mit Impulsstromtechnik gearbeitet. Bei negativer Polung der Elektrode klettert der Lichtbogen an der Elektrode hoch. Dies hat zur Folge, dass die Energieeinbringung über eine große Fläche, die den gesamten Bereich am Abschluss der Elektrode umfasst, stattfindet, wodurch sich die Überhitzung am Elektrodenende vermindert. Bei einer negativen Polung der Elektrode erfolgt die Tropfenablösung nicht unter Mitwirkung des Pincheffekt. Die fehlende Tropfeneinschnürung führt zu Prozessinstabilitäten und zu einem spritzerbehafteden Materialübergang, weshalb das Schweißen mit negativer Polung sehr selten zum Verbindungsschweißen angewendet wird. Beim Wechselstromschweißen erfolgt eine periodische Umpolung der Elektrode zwischen positiver und negativer Polung.

Das Schweißen mit Wechselstrom wird seit vielen Jahren angewandt und verschiedene Druckschriften betreffen diesen Prozess. So beinhaltet in DE 4023155 eine Synchronisation von Drahtzufuhr und negativer Polung des Wechselstroms. In der DE 19906039 wiederum wird ein maximaler Strompegel für die positive Phase festgesetzt. Die EP 0890407 beinhaltet eine Vorgehensweise zur Verringerung der Abfallzeit beim Abfall des positiven Schweißstroms. Die EP 1491278 offenbart die Verwendung von Helium und von dotiertem Helium im Schutzgas beim Wechselstromschweißen. Die US 6376802 beinhaltet ein Verfahren, welches ein Unterbrechen des Lichtbogens verhindert. Dazu folgt auf eine erste Phase mit positiver Polung und einem Strom, der zur Topfenablösung ausreichend hoch ist, eine zweite Phase mit negativer Polung, wobei der Stromwert der zweiten Polung nicht zur Tropfenablösung ausreicht, und schließlich eine dritte Phase mit positiver Polung mit einer Stromstärke, bei welcher eine Tropfenablösung nicht stattfindet.
Die US 2002/0030043 A1 offenbat ein Verfahren zum Wechselstromschweißen, bei dem eine Stromperiode sich in drei Abschnitte gliedert: eine positive Hochstromphase gefolgt von einer negativen Stromphase und einer positven Grundstromphase. Zwischen Hochstromphase und negativer Stromphase kann eine weitere positive Stromphase eingefügt sein. Die WO 2006/089322 A1 beinhaltet ein Stromprofil, das speziell auf die Tropfenablösung beim Schweißen mit Kurzschluss abgestimmt ist, so dass der Kurzschluss geregelt wird.

Das Schweißen und auch das Löten mit abschmelzender Elektrode und Wechselstrom ist jedoch bei höheren Abschmelzleistungen mit einer starken Spritzerbildung behaftet. Bei hohen Abschmelzleistungen geht die Spritzerbildung oft soweit, dass ein Schweißen nicht mehr möglich ist, da das in die Verbindung einzubringende oder auf das Werkstück aufzutragende Material in alle Richtungen verspritzt und nicht den Bearbeitungsort erreicht. Da die Spritzerbildung mit steigender Abschmelzleistung zunimmt, zeigt sich diese Problematik erst bei hohen Abschmelzleistungen. Dies hat zur Folge, dass eine Anwendung des Wechselstromschweißens beziehungsweise Wechselstromlöten bei hohen Abschmelzleistungen nicht möglich ist beziehungsweise zu sehr minderwertigen Schweiß- und Lotverbindungen führt.

Beim Hochleistungsschweißen sind, damit die hohen Abschmelzleistungen möglich werden, hohe Energieeinträge notwendig. Die Energie, die mit einem hohen Schweißstrom einhergeht, führt zu der Erweichung und Ablösung des Elektrodenmaterials. Am Ende der Elektrode, wo der Lichtbogen ansetzt, führt dies jedoch zu einer Überhitzung des Elektrodenmaterials mit der Folge, das die dem Schweißprozess zugeführte Energie nicht zum Schmelzen genutzt werden kann. Ferner kommt es zu Prozessinstabilitäten, wenn die Elektrode zu heiß wird.

Der Erfindung liegt deshalb die Aufgabe zugrunde, ein Verfahren zum Lichtbogenfügen, insbesondere zum Lichtbogenschweißen mit abschmelzender Elektrode anzugeben, welches ein Schweißen im Hochleistungsbereich erlaubt und hohe Abschmelzleistungen beim Wechselstrom-Schweißen und Wechsesstrom-Löten ermöglicht.

Die Aufgabe wird erfindungsgemäß dadurch gelöst, dass die negative Phase mindestens eine negative Hochstromphase und mindestens eine negative Grundstromphase aufweist, wobei die negative Grundstromphase innerhalb der Periode zeitlich nach der negativen Hochstromphase angelegt wird, und dass in der gesamten negativen Phase ein diffuser Lichtbogen brennt. Die positive Grundstromphase muss dabei ausreichend lang dauern.

Zum Hochleistungsschweißen und Hochleistungslöten ist ein hoher Energieeintrag Grundvoraussetzung, da nur bei entsprechend hohem Energieeintrag eine hohe Abschmelzleistung erreicht werden kann. Da ein hoher Energieeintrag mit hohen Stromwerten einhergeht, müssen für hohe Abschmelzleistungen sehr hohe Stromwerte eingestellt werden. Bei hohem Energieeintrag wird das Elektrodenmaterial sehr weich und mit Unterstützung des Pincheffekts löst sich das Elektrodenmaterial sehr gut, so dass sehr effektiv Elektrodenmaterial abgeschmolzen wird und so die für das Hochleistungsschweißen und -löten notwendigen hohen Abschmelzleistungen möglich werden. Bei einer Umpolung führt das sehr weiche Elektrodenmaterial jedoch zu einer sehr starken Spritzerbildung, so dass das untere Elektrodenende in alle Richtungen spritzt und der Materialeintrag in die Bearbeitungsstelle äußert unzureichend ist. Es muss nun auf die positive Hochstromphase noch eine positive Grundstromphase folgen. Durch den niedrigen Stromwert, den die positive Grundstromphase dazu ausreichend lange aufweisen muss, wird der Energieeintrag in den Lichtbogen und die abschmelzende Elektrode zurückgenommen. Für die Elektrode bedeutet dies, dass ihr Ende in der Grundstromphase im Vergleich zur Hochstromphase wieder fester und steifer wird. Auch die Pinchkraft wirkt aufgrund der niedrigen Stromstärke nur vergleichsweise schwach, so dass kaum eine Einschnürung am Elektrodenende stattfindet. Das untere Elektrodenende ist somit vor der Umpolung in die negative Phase in einem mäßig erweichten Zustand und weist kaum eine auf der Einschnürung beruhende Verengung auf. Bei der Umpolung spritzt das Elektrodenmaterial folglich kaum. Die Grundstromphase ist somit ausreichende lange, wenn die Spritzerbildung hinreichend unterbunden wird. Damit die Spritzerbildung wirkungsvoll unterbunden wird, ist vorteilhafterweise darauf zu achten, dass die Elektrode vor der Umpolung so fest wie möglich ist. Diese mit der Erfindung einhergehende Spritzerminimierung bei der Umpolung von positivem zu negativem Strom ist notwendig, um ein qualitativ hochwertiges Hochleistungsfügen, insbesondere ein Hochleistungsschweißen mit Wechselstrom zu ermöglichen.

Weiterhin ist es notwenig, um den Energieeintrag in den Fügeprozess, insbesondere in den Schweißprozess zu optimieren und um Spritzer in der negativen Phase zu vermeiden, dass in der negativen Phase ein diffuser Lichtbogen zwischen Elektrode und Werkstück brennt. Ein diffuser Lichtbogen entsteht bei negativer Polung der Elektrode und durch entsprechend niedriger Wahl des Stromwerts. Aufgrund der negativen Polung der Elektrode und des kleinen Stromwerts, setzt der Lichtbogen nicht am untersten Ende der Elektrode an, sondern der Lichtbogenansatz umfasst ausschließlich den Abschlussbereich der Elektrode, also einen weiten Bereich am Ende der Elektrode. Bei Verwendung einer drahtförmigen Elektrode umfasst der Lichtbogen einen großen. Teil der freien Drahtlänge. Der Wert für den Strom wird dabei so niedrig gewählt, dass ausschließlich der diffuse Lichtbogen brennt und nicht ein Lichtbogen mit hellem Kern, der von einem Lichthof, welcher den Abschlussbereich der Elektrode umfasst, umgeben ist. Ein Lichtbogen mit hellem Kern und Lichthof ergibt sich bei höheren Stromwerten und ist auch vom Schweißen mit negativer Elektrodenpolung und Gleichstrom her bekannt und führt zu Prozessinstabilitäten. Im diffusen Lichtbogen wird ein großer Teil des freien Endes der Drahtelektrode durch den Lichtbogen der erwärmt und auch erweicht. Aufgrund der großflächigen Erwärmung der Elektrode im diffusen Lichtbogen wird das Abschmelzen der Elektrode in der positiven Phase optimal vorbereitet. Es ist deshalb darauf zu achten, dass die Energieeinfuhr in der negativen Phase möglichst hoch ist, jedoch darf in der negativen Phase nur der diffuse Lichtbogen brennen, um eine Überhitzung der Elektrode wirkungsvoll zu unterbinden. Die Verwendung des diffusen Lichtbogens in der negativen Phase sorgt somit für einen effektiven Energieeintrag in den Schweißprozess und verhindert, dass die Elektrode zu heiß wird. Dadurch wird ein Hochleistungsfügen, insbesondere ein Hochleistungsschweißen unter stabilen Bedingungen möglich und es entstehen qualitativ hochwertige Schweißverbindungen.

Folglich ist es so, dass mit dem erfindungsgemäßen Verfahren die für das Hochleistungsschweißen und Hochleistungsfügen notwendige Energiemenge in den Schweißprozess beziehungsweise Lötprozess eingeführt wird und zwar stets im richtigen Maß. Deshalb wird die Energie dem erfindungsgemäßen Verfahren so zugeführt, dass einerseits genügend Energie zugeführt wird, um die Ablösung des Elektrodenmaterials optimal zu unterstützen und hohe Abschmelzleistungen zu erreichen, und anderseits werden Prozessinstabilitäten, zu denen Hochleistungsprozesse ja aufgrund der hohen Energiezufuhr ganz besonders neigen, unterbunden. Dabei wird auch der mit einer Überhitzung einhergehende Energieverlust vermindert, da ja die Überhitzung der Elektrode deutlich reduziert wird.

Mit dem erfindungsgemäßen Verfahren wird eine deutliche Produktivitätssteigerung und eine erhebliche Senkung der Herstellungskosten geschweißter Bauteile erreicht. Die erfindungsgemäßen Vorteile zeigen sich bei der Herstellung aller Arten von Schweiß- und Lotverbindungen und auch beim Auftragschweißen und Auftragslöten.

Gemäß der Erfindung weist die negative Phase mindestens eine negative Hochstromphase und mindestens eine negative Grundstromphase aufweist, wobei die negative Grundstromphase innerhalb der Periode zeitlich nach der negativen Hochstromphase angelegt wird. Die Grundstromphase liegt dabei direkt vor der Umpolung an. Dadurch, dass die negative Phase mindestens eine Grund- und eine Hochstromphase aufweist, kann ein ausreichender Energieeintrag in der negativen Phase erfolgen und trotzdem vor dem Umpolen ein sehr kleiner Stromwert eingestellt werden. Die Spritzerbildung bei der Umpolung von der negativen in die positive Phase ist auf folgendes zurückzuführen: In der negativen Phase entsteht verstärkt Metalldampf. Die sich ausbildende Metalldampfströmung erzeugt unmittelbar nach dem Umpolen Turbulenzen im Lichtbogen. Dies führt zur Spritzerbildung. Ist nun der Stromwert der Grundstromphase gering, wird diese Ursache der Spritzerbildung stark vermindert.

Mit besonderen Vorteilen erfolgt ein Materialübergang durch Tropfenablösung von der abschmelzenden Elektrode ausschließlich in der positiven Phase. Dabei kann sich in der positiven Phase ein oder mehrere Tropfen ablösen. In der positiven Phase erfolgt aufgrund des Pincheffekts eine Tropfeneinschnürung, die die Tropfenablösung unterstützt. Dadurch erfolgt der Materialübergang sehr effektiv und gezielt in das Schweißbad. Auch ein Verspritzen von Elektrodenmaterial beim Ablösen von der Elektrode wird vermieden. Die Ablösung der/des Tropfen(s) sollte dabei vorteilhafterweise in den ersten zwei Dritteln, besonders bevorzugt im ersten Drittel des Zeitintervalls der positiven Phase erfolgen. Damit verbleibt anschließend noch genügend Zeit vor der Umpolung, in der die Elektrode den zäh-teigigen Zustand annehmen kann und die Spritzerbildung unterbunden wird. Folglich zeichnet sich die vorteilhafte erfindungsgemäße Ausgestaltung durch einen sehr effektiven Materialeintrag in die Schweiß- oder Lotverbindung und beim Auftragschweißen und Auftragslöten durch einen sehr hohen Materialauftrag auf den Grundwerkstoff aus - und dies bei Spritzerarmut.

Vorteilhafterweise nimmt die Zeit, die die positive Hochstromphase dauert, 10 bis 40 %, vorzugsweise 20 bis 30 % der Dauer der positiven Phase ein. Damit wird gewährleistet, dass genügend Energie in den Prozess eingebracht wird und auch der Pincheffekt zu einer ausreichenden Tropfeneinschnürung führt. Es ist jedoch nicht notwendig, dass sich der oder die Tropfen in der positiven Hochstromphase lösen, wenn dies auch in den meisten Fällen vorteilhaft sein wird, sondern die Tropfenablösung kann durchaus auch noch in der positiven Grundstromphase geschehen. Jedoch sollte nach der Tropfenablösung noch ausreichend Zeit verbleiben, damit die Spritzerbildung unterdrückt wird. Um dies zu gewährleisten, ist es deshalb vorteilhafterweise so, dass die positive Grundstromphase länger als die positive Hochstromphase dauert.

Mit besonderen Vorteilen weist der diffuse Lichtbogen einen Ansatzpunkt an der Elektrode eine Länge auf, die das zwei- bis siebenfache, bevorzugt das drei- bis fünffache des Durchmessers der Elektrode beträgt.

Besondere Vorteile zeigen sich, wenn Abschmelzleistungen zwischen 6 und 15 kg/h, vorzugsweise zwischen 7 und 11 kg/h verwendet werden. Das erfindungsgemäße Verfahren macht ein wärmearmes Schweißen und Löten mit derart hohen Abschmelzleistungen möglich. Die hohen Abschmelzleistungen ermöglichen hohe Fügegeschwindigkeiten oder/und hohen Materialeintrag. Als Elektrode wird dazu bevorzugt Drahtelektroden mit einem Durchmesser von vorzugsweise 0,8 bis 1,6 mm, besonders vorzugsweise von 1,0 bis 1,2 mm eingesetzt, da mit diesen Drahtdurchmessern die hohen Abschmelzleistungen wirkungsvoll unterstützt werden.

In vorteilhafter Ausgestaltung der Erfindung werden in eine oder mehrere der Flanken, die sich zwischen positiver Hochstromphase und positiver Grundstromphase, zwischen positiver Grundstromphase und Nulldurchgang und zwischen negativer Grundstromphase und Nulldurchgang, eine oder mehrere Stromschultern eingefügt. Dadurch wird die Prozessstabilität erhöht und die Spritzbildung minimiert.

Weiterhin kann es von Vorteil sein, dass in der positiven oder/und in der negativen Phase Zwischenimpulse eingefügt werden. Zwischenimpulse wirken sich in manchen Fällen vorteilhaft auf die Prozessstabilität aus.

Mit Vorteil werden als Schutzgas Gase oder Gasgemische verwendet werden, die zumindest Argon, Helium, Kohlendioxid, Sauerstoff und/oder Stickstoff enthalten. Die Festlegung des geeigneten. Gases beziehungsweise der geeigneten Gasmischung erfolgt in Abhängigkeit von der Schweiß- beziehungsweise Lotaufgabe, insbesondere unter Berücksichtigung von Grund- und Zusatzwerkstoff. Es kommen sowohl die Reingase als auch Zwei-, Drei- und Mehr-Komponenten-Gemische zum Einsatz. In vielen Fällen erweisen sich auch dotierte Gasmischungen als besonders vorteilhaft, wobei dotierte Gasmischungen Dotierungen mit aktiven Gasen im vpm-Bereich aufweisen, d.h. die Dotierung erfolgt im Bereich von weniger als einem Prozent, meist weniger als 0,1 Vol.%. Als Dotiergas werden aktive Gase, wie beispielsweise Sauerstoff, Kohlendioxid, Stickstoffmonoxid, Lachgas oder Stickstoff verwendet. Das erfindungsgemäße Verfahren eignet sich insbesondere, wenn Werkstücke aus Stählen oder Magnesium/Magnesiumlegierungen bearbeitet werden. So eignet es sich für alle Stahlsorten inklusive Baustählen, Feinkombaustählen und nichtrostende Stählen. Ebenso ist eine Anwendung für andere Nichteisenmetalle wie beispielsweise Aluminium/Aluminiumlegierungen möglich. Weiterhin werden durch das erfindungsgemäße Verfahren die Möglichkeiten zur Herstellung von Mischverbindungen erweitert. Besondere Vorteile zeigt das erfindungsgemäße Verfahren auch bei Werkstoffen, die eine niedrige Wärmeleitfähigkeit aufweisen, da diese eine von der niedrigen Wärmeeinbringung des erfindungsgemäßen Verfahren besonders profitieren.

Das erfindungsgemäße Verfahren erweitert die Möglichkeiten des Hochleistungsfügen, insbesondere des Hochleistungsschweißen durch Erschließen neuer und Verbessern bekannter Anwendungen. Es eignet sich für alle Arten von Schweiß- und Lotverbindungen und auch für das Auftragsschweißen und Auftragslöten. Beispielsweise wird es durch das erfindungsgemäße Verfahren auch möglich, Wurzellagen und Einseitenverbindungen, insbesondere Einseitenverbindungen im Blechbereich von weniger als 4 mm im Hochleistungsbereich zu schweißen. Mit den dem MSG-Hochleistungsschweißverfahren mit positiv gepolter Elektrode war das Schweißen derartiger Verbindungen nicht oder nur sehr beschränkt möglich. In vielen Fällen war eine zusätzliche Badstütze erforderlich, die aber aus geometrischen Gründen nicht immer angebracht werden konnte. Auch zeichnet sich das erfindungsgemäße Verfahren durch eine hohe Spaltüberbrückbarkeit aus.

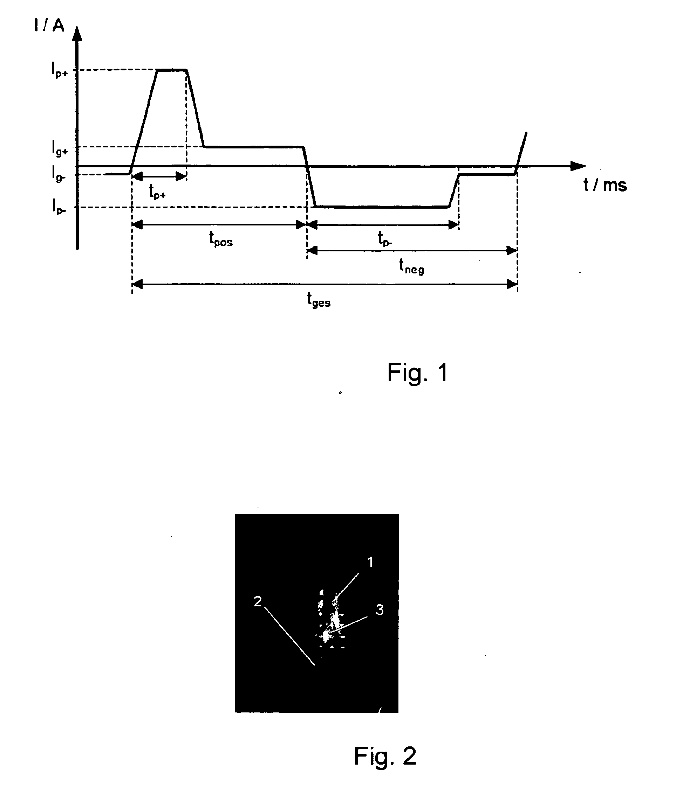

Im Folgenden soll die Erfindung anhand von Figur 1 und 2 näher erläutert werden.
Figur 1 zeigt eine für das erfinderische Verfahren beispielhafte Stromform.
Figur 2 zeigt eine fotographische Aufnahme eines diffusen Lichtbogens, wie er sich vorteilhafterweise in der negativen Phase ergibt.

Figur 1 zeigt eine beispielhafte Stromform des erfinderischen Verfahrens. Als Stromform ist der Strom I gegen die Zeit t aufgetragen. Gezeigt ist der Verlauf des Stroms I innerhalb einer Phase. Der Stromverlauf wiederholt sich also nach der Zeit t_{ges}. Der Strom steigt, vom negativen kommend, den Nulldurchgang passierend auf den Wert I_{P+} der positiven Hochstromphase an und hält diesen, bis die Zeit tₚ₊ vergangen ist. Danach fällt der Strom auf den Wert der positiven Grundstromphase I_{g+} ab. Dieser Wert wird gehalten bis die positive Phase vorbei ist und der Nulldurchgang zur Phase mit negativer Polung erfolgt. Da die positive Phase die Zeit tₚₒₛ dauert, liegt folglich der positive Grundstrom I_{g+} für die Zeit tₚₒₛ minus tₚ₊ an. Die negative Phase dauert die Zeit t_{neg}. In der negativen Phase erreicht der negative Strom den Wert der negativen Hochstromphase Iₚ₋. Auf die negative Hochstromphase mit Iₚ₋ mit der Dauer tₚ₋ folgt die negative Grundstromphase I_{g-}, die für die Zeit t_{neg} minus tₚ₋ anliegt. Danach steigt der Strom an und der Nulldurchgang erfolgt. Die nächste Periode beginnt.

Weiterhin ist zu der beispielhaften Stromform gemäß Fig. 1 anzumerken, dass die Zeit tₚₒₛ und die Zeit t_{neg} gleich lang sind, es aber durchaus von Vorteil sein, wenn tₚₒₛ länger als t_{neg} ist, oder, in anderen Fällen, wenn t_{neg} länger als tₚₒₛ ist.

Zur Erhöhung der Prozessstabilität kann eine Stromschulter von Vorteil sein. Fig. 1 beinhaltet keine Stromschulter, jedoch soll das Anbringen einer Stromschulter anhand von Fig. 1 näher erklärt werden. Eine Stromschulter in der positiven Phase unterbricht den Abfall zwischen positiver Hochstromphase Iₚ₊ und positiver Grundstromphase I_{g+} und fügt ein Plateau auf einem Zwischenwert ein, der zwischen Iₚ₊ und I_{g+} liegt. Eine Stromschulter zwischen der positiven Grundstromphase und dem Nulldurchgang liegt zwischen I_{g+} und Null. Wird eine Stromschulter zwischen der negativen Grundstromphase und der Umpolung eingefügt, so wird ein Zwischenwert zwischen I_{g-} und Null eingeschoben. Es ist auch ein Einfügen von mehreren, aufeinander folgenden Stromschultern möglich.

Im Folgenden werden beispielhafte Parameter zum Betreiben der Stromform angegeben. Als Frequenz für den Wechselstrom werden vorteilhafterweise Frequenzen zwischen 40 und 150 Hz, besonders bevorzugt zwischen 50 und 120 Hz gewählt. Die Stromstärke Iₚ₊ der positiven Hochstromphase beträgt mit Vorteil mehr als 450 A, der absolute Stromstärkenwert in der negativen Hochstromphase |Iₚ₋| liegt vorteilhafterweise im Bereich zwischen kleiner gleich 350 A, der absolute Stromstärkenwert |I_{g-}| der Grundstromphase ist vorteilhafterweise geringer als 100 A.

In Fig. 2 ist der diffuse Lichtbogen zu sehen, wie er sich erfindungsgemäß während der gesamten negativen Phase zeigt. Bei der Fotografie handelt es sich um eine Hochgeschwindigkeitsaufnahme, die Elektrode 1, diffusen Lichtbogen 2 und Tropfen 3 zeigt. Man erkennt die Elektrode 1 mit dem sich ablösenden Tropfen 3. Der diffuse Lichtbogen 2 setzt an dem Abschlussbereich der Elektrode an. Der diffuse Lichtbogen brennt somit zwischen dem Bereich am Ende der Elektrode 1 und dem Werkstück.

### Bezugszeichenliste

- Iₚ₊: Stromwert in der positiven Hochstromphase
- I_{g+}: Stromwert in der positiven Grundstromphase
- I_{g-}: Stromwert in der negativen Grundstromphase
- Iₚ₋: Stromwert in der negativen Hochstromphase
- tₚ₊: Zeitdauer der positiven Hochstromphase
- tₚₒₛ: Zeitdauer der positiven Phase
- tₚ₋: Zeitdauer der negativen Hochstromphase
- t_{neg}: Zeitdauer der negativen Phase
- t_{ges}: Zeitdauer der gesamten Phase
- 1: Elektrode
- 2: diffuser Lichtbogen
- 3: Tropfen

## Patentansprüche

1. Verfahren zum Lichtbogenfügen, insbesondere zum Lichtbogenschweißen mit abschmelzender Elektrode, wobei zur Lichtbogenerzeugung ein Wechselstrom zwischen Elektrode und Werkstück angelegt wird, wobei der Wechselstrom eine Stromform aufweist, die sich nach einer Periode wiederholt, und wobei die Stromform innerhalb einer Periode zumindest eine positive Phase, die sich mindestens in eine positive Hochstromphase und in mindestens eine.positive Grundstromphase gliedert, und zumindest eine negative Phase aufweist, wobei die positive Grundstromphase innerhalb der Periode zeitlich nach der positiven Hochstromphase angelegt wird, wobei die negative Phase mindestens eine negative Hochstromphase und mindestens eine negative Grundstromphase aufweist, wobei die negative Grundstromphase innerhalb der Periode zeitlich nach der negativen Hochstromphase angelegt wird, **dadurch gekennzeichnet, dass** in der gesamten negativen Phase ein diffuser Lichtbogen brennt.

2. Verfahren nach Anspruch 1, **dadurch gekennzeichnet, dass** ein Materialübergang durch Tropfenablösung von der abschmelzenden Elektrode ausschließlich in der positiven Phase erfolgt.

3. Verfahren nach Anspruch 1 oder 2, **dadurch gekennzeichnet, dass** die Zeit, die die positive Hochstromphase dauert, 10 bis 40 %, vorzugsweise 20 bis 30 % der Dauer der positiven Phase einnimmt.

4. Verfahren nach einem der Ansprüche 1 bis 3, **dadurch gekennzeichnet, dass** der diffuse Lichtbogen einen Ansatzpunkt an der Elektrode eine Länge aufweist, die das zwei- bis siebenfache, bevorzugt das drei- bis fünffache des Durchmessers der Elektrode beträgt.

5. Verfahren nach einem der Ansprüche 1 bis 4, **dadurch gekennzeichnet, dass** Abschmelzleistungen zwischen 6 und 15 kg/h, vorzugsweise zwischen 7 und 11 kg/h verwendet werden.

6. Verfahren nach einem der Ansprüche 1 bis 5, **dadurch gekennzeichnet, dass** in eine oder mehrere der Flanken, die sich zwischen positiver Hochstromphase und positiver Grundstromphase, zwischen positiver Grundstromphase und Nulldurchgang und zwischen negativer Grundstromphase und Nulldurchgang, eine oder mehrere Stromschultern eingefügt werden.

7. Verfahren nach einem der Ansprüche 1 bis 6, **dadurch gekennzeichnet**, in der positiven oder/und in der negativen Phase Zwischenimpulse eingefügt werden.

8. Verfahren nach einem der Ansprüche 1 bis 7, **dadurch gekennzeichnet, dass** als Schutzgas Gase oder Gasgemische verwendet werden, die zumindest Argon, Helium, Kohlendioxid, Sauerstoff und/oder Stickstoff enthalten.

9. Verfahren nach einem der Ansprüche 1 bis 8, **dadurch gekennzeichnet, dass** Werkstücke aus Stählen oder Magnesium/Magnesiumlegierungen bearbeitet werden.

## Claims

1. Method for arc joining, in particular for arc welding with a consumable electrode, wherein an alternating current is applied between electrode and workpiece for arc generation, wherein the alternating current has a current form which is repeated after one period, and wherein the current form has, within one period, at least one positive phase, which is divided into at least one positive high current phase and into at least one positive background current phase, and at least one negative phase, wherein the positive background current phase is applied within the period temporally after the positive high current phase, wherein the negative phase has at least one negative high current phase and at least one negative background current phase, wherein the negative background current phase is applied within the period temporally after the negative high current phase, **characterized in that** a diffuse arc burns throughout the negative phase.

2. Method according to Claim 1, **characterized in that** material transfer takes place by means of drop detachment from the consumable electrode exclusively in the positive phase.

3. Method according to Claim 1 or 2, **characterized in that** the time for which the positive high current phase lasts takes up from 10 to 40%, preferably from 20 to 30%, of the duration of the positive phase.

4. Method according to one of Claims 1 to 3, **characterized in that** the diffuse arc has a route on the electrode with a length which is from two to seven times, preferably from three to five times, the diameter of the electrode.

5. Method according to one of Claims 1 to 4, **characterized in that** deposition efficiencies of between 6 and 15 kg/h, preferably between 7 and 11 kg/h, are used.

6. Method according to one of Claims 1 to 5, **characterized in that** one or more current shoulders are inserted into one or more of the flanks which are located between the positive high current phase and the positive background current phase, between the positive background current phase and the zero crossing and between the negative background current phase and the zero crossing.

7. Method according to one of Claims 1 to 6, **characterized in that** intermediate pulses are inserted in the positive and/or in the negative phase.

8. Method according to one of Claims 1 to 7, **characterized in that** gases or gas mixtures which contain at least argon, helium, carbon dioxide, oxygen and/or nitrogen are used as shielding gas.

9. Method according to one of Claims 1 to 8, **characterized in that** workpieces of steels and/or of magnesium/magnesium alloys are worked.

## Revendications

1. Procédé de jonction à l'arc lumineux, en particulier de soudage à l'arc lumineux avec électrode fusible, dans lequel
un courant alternatif est appliqué entre l'électrode et la pièce pour former l'arc lumineux,
le courant alternatif présentant une forme qui se répète périodiquement,
la forme du courant présentant à l'intérieur d'une période au moins une phase positive qui se compose d'au moins une phase à haut courant positif et au moins une phase à courant positif de base, et au moins une phase négative,
la phase à courant positif de base étant appliquée dans une période après la phase à haut courant positif,
la phase négative présentant au moins une phase à haut courant négatif et au moins une phase à courant de base négatif,
la phase à courant de base négatif étant appliquée dans une période après la phase à haut courant négatif, **caractérisé en ce que**
un arc lumineux diffus brûle au cours de la totalité de la phase négative.

2. Procédé selon la revendication 1, **caractérisé en ce qu'**un transfert de matière par égouttage de l'électrode fusible a lieu exclusivement pendant la phase positive.

3. Procédé selon la revendication 1 ou 2, **caractérisé en ce que** la durée de la phase à haut courant positif constitue de 10 à 40 % et de préférence de 20 à 30 % de la durée de la phase positive.

4. Procédé selon l'une des revendications 1 à 3, **caractérisé en ce que** l'arc lumineux diffus présente sur l'électrode un point d'extension dont la longueur représente de deux à sept fois et de préférence de trois à cinq fois le diamètre de l'électrode.

5. Procédé selon l'une des revendications 1 à 4, **caractérisé en ce que** les capacités de fusion sont comprises entre 6 et 15 kg/h et de préférence entre 7 et 11 kg/h.

6. Procédé selon l'une des revendications 1 à 5, **caractérisé en ce qu'**un ou plusieurs épaulements de courant sont insérés dans un ou plusieurs des flancs qui se situent entre la phase à haut courant positif et la phase à courant positif de base, entre la phase à courant positif de base et le passage par zéro et entre la phase à courant négatif de base et le passage par zéro.

7. Procédé selon l'une des revendications 1 à 6, **caractérisé en ce que** des impulsions intermédiaires sont insérées dans la phase positive et/ou dans la phase négative.

8. Procédé selon l'une des revendications 1 à 7, **caractérisé en ce qu'**il utilise comme gaz protecteur des gaz ou des mélanges de gaz qui contiennent au moins de l'argon, de l'hélium, du dioxyde de carbone, de l'oxygène et/ou de l'azote.

9. Procédé selon l'une des revendications 1 à 8, **caractérisé en ce qu'**il traite des pièces en aciers, en magnésium ou en alliages de magnésium.
